# EUROPÄISCHE PATENTSCHRIFT

(11) **EP 2 404 782 B1**
(45) Veröffentlichungstag und Bekanntmachung des Hinweises auf die Patenterteilung: **22.05.2013**
(21) Anmeldenummer: 11466019.4
(22) Anmeldetag: 01.07.2011
(51) Int. Cl.: B60R 5/04, B60R 7/02

(54) **Demontierbares Aufhängemittel im Kofferraum**
Demountable suspension means in a luggage compartment
Dispositif de suspension démontable dans un compartiment à bagages

(30) Priorität: 07.07.2010 CZ 20100536
(43) Veröffentlichungstag der Anmeldung: 11.01.2012
(73) Patentinhaber: Skoda Auto a.s., 293 60 Mlada Boleslav (CZ)
(72) Erfinder: Urválek, Pavel, 29306 Kosmonosy (CZ)

(56) Entgegenhaltungen:
- EP-A1- 1 103 415

## Beschreibung

### Technisches Gebiet

Die Erfindung Betrifft ein in der Seitenverkleidung des Fahrzeugkofferraumes angeordnetes demontierbares Aufhängemittel, das zur Befestigung der im Fahrzeugkofferraum transportierten Gegenstände, zur Aufhängung von Einkaufstaschen, zur Befestigung der Netzprogramme u.ä. dient.

### Bisheriger Stand der Technik

Entsprechend der Art der im Fahrzeugkofferraum transportierten Gegenstände, sei es in der Combi- oder Limousine-Ausführung, werden derzeit zur deren Befestigung oder Sicherung verschiedene Methoden verwendet. Bekannt sind verschiedene Arten von Raum-Organizer, bestehend aus festen oder verstellbaren Trenneinsätzen, die zur Sicherung von Kleingegenständen, Einkaufstaschen usw. dienen. Zum ähnlichen Zweck dienen auch verschiedene Arten von festen oder klappbaren Haken, die seitlich im Kofferraum oder hinter den Rücksitzen angeordnet sind, auf die man Taschen mit transportierten Gegenständen aufhängen kann. Als Beispiel solcher Haken können die in der Patentschrift CZ 293138 B6, oder in der Patentanmeldung DE 102004002050 A1 beschriebenen Lösungen sein. Das gemeinsame Merkmal dieser Ausführungen ist die Tatsache, dass diese fest mit der Fahrzeugkarosserie verbunden sind, was neben der reduzierten Variabilität auch erhöhte Kosten bezüglich der Befestigungsmittel sowie einer Karosserieverstärkung verursacht. Weiter sind Lösungen bekannt, wo der Haken demontierbar in der Seitenwand des Kofferraumes befestigt ist, was die Variabilität der Nutzung des Kofferraumes erhöht. Als Beispiel solcher Anordnung kann die in der Patentschrift DE 4333479 beschriebene Ausführung sein. Hier ist der Haken demontierbar in einer Befestigungsöffnung eingerastet, wobei für seine Fixierung in der Seitenwand der Kofferraumverkleidung ein Schenkelpaar dient, das sich bei der Belastung des Hakens an der Innenwand der Verkleidung abstützt. Der Nachteil dieser Lösung liegt darin, dass bei größerer Belastung zur Beschädigung eines der Schenkel und somit zur ungewollter Loslösung des Hakens kommen kann. Aus der Patentanmeldung EP 1103415 ist ein demontierbares Aufhängemittel zu dem eine Hängröse betstigt ist bekannt. Das Aufhängemittel wird mit einem Bolzen an der Seitenverkleidung befestigt.

### Darstellung der Erfindung

Die Aufgabe wird durch ein demontierbares Aufhängemittel im Kofferraum gelöst, das zur Befestigung an einer Drahtöse in der Einsenkung in der Seitenverkleidung des Kofferraumes bestimmt ist. Das demontierbare Aufhängemittel wird durch eine Grundplatte gebildet, in der verschiebbar das Ankerglied gelagert ist, zu dem die Hängeöse befestigt ist. Die Darstellung der Erfindung liegt darin, dass das Ankerglied an einem Ende einen Haken und an dem anderen Ende ein Auge mit Bolzen aufweist, an dem schwenkbar die Hängeöse befestigt ist, welche einen Abstützteil und einen Hängeteil aufweist, wobei in der befestigten Position des demontierbaren Aufhängemittels der Haken in der Drahtöse eingehakt ist und der Abstützteil der Hängeöse sich an der Stirnfläche der Grundplatte abstützt. Für die Arretierung der Hängeöse ist an der Stirnfläche der Grundplatte eine Sicherungsaussparung ausgebildet. Zu einer stabilen Position des demontierbaren Aufhängemittels trägt seine viereckige Form bei, die mit der Form der Einsenkung in der Seitenverkleidung übereinstimmt.

### Übersicht der Figuren der Zeichnungen

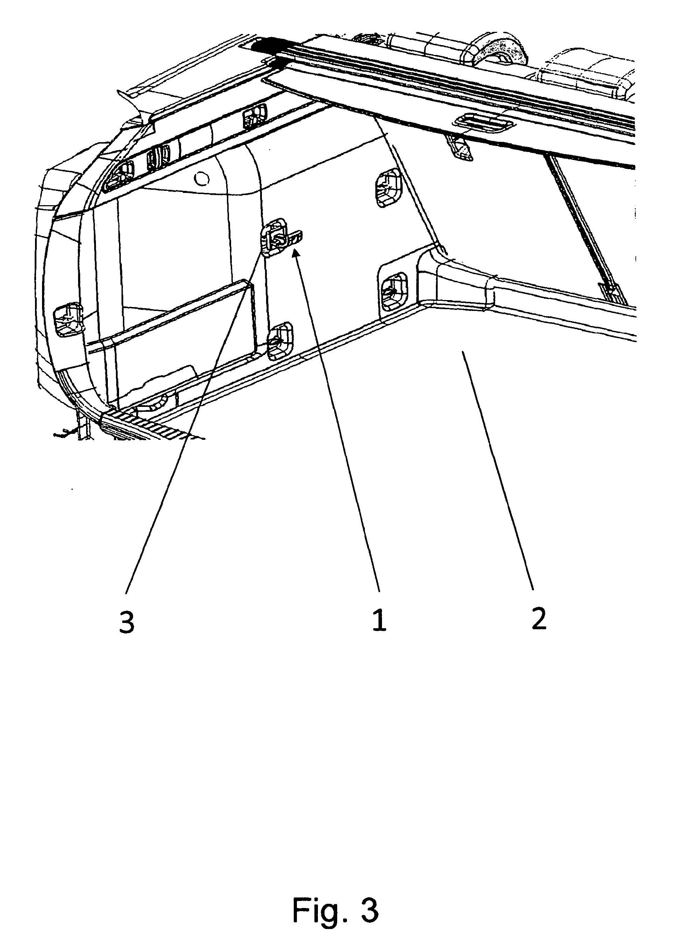

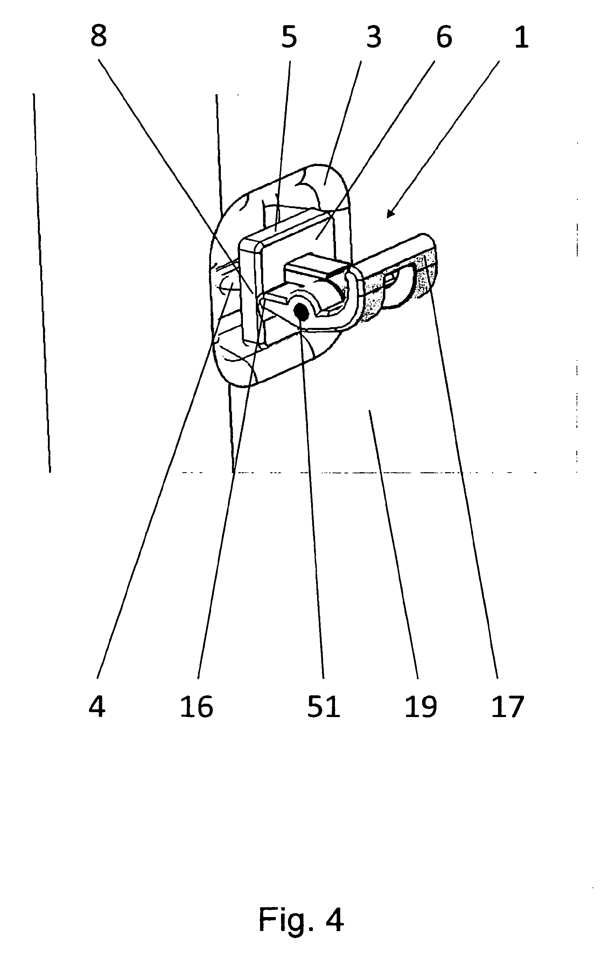

Die Erfindung wird näher anhand der Ausführungsbeispiele gemäß den beigefügten Zeichnungen erläutert, in denen die Fig. 1 den Kofferraum in perspektivischer Ansicht, die Fig. 2 das demontierbare Aufhängemittel im zerlegten Zustand in perspektivischer Ansicht, die Fig. 3 das in der Drahtöse in der Einsenkung des Kofferraumes befestigte demontierbare Aufhängemittel in einer Ansicht und die Fig. 4 das befestigte demontierbare Aufhängemittel in einer Detailansicht darstellt.

### Ausführungsbeispiel der Erfindung

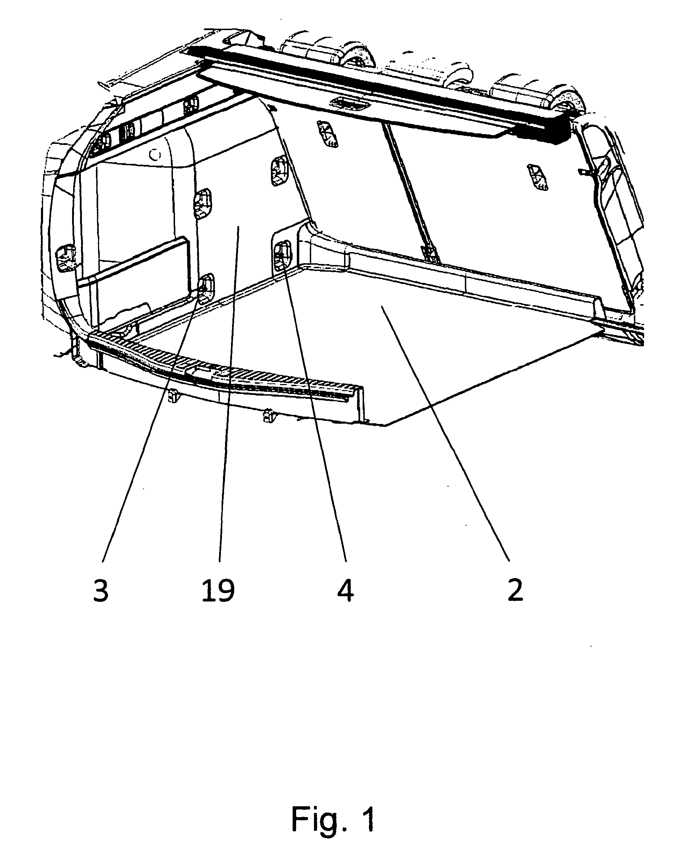

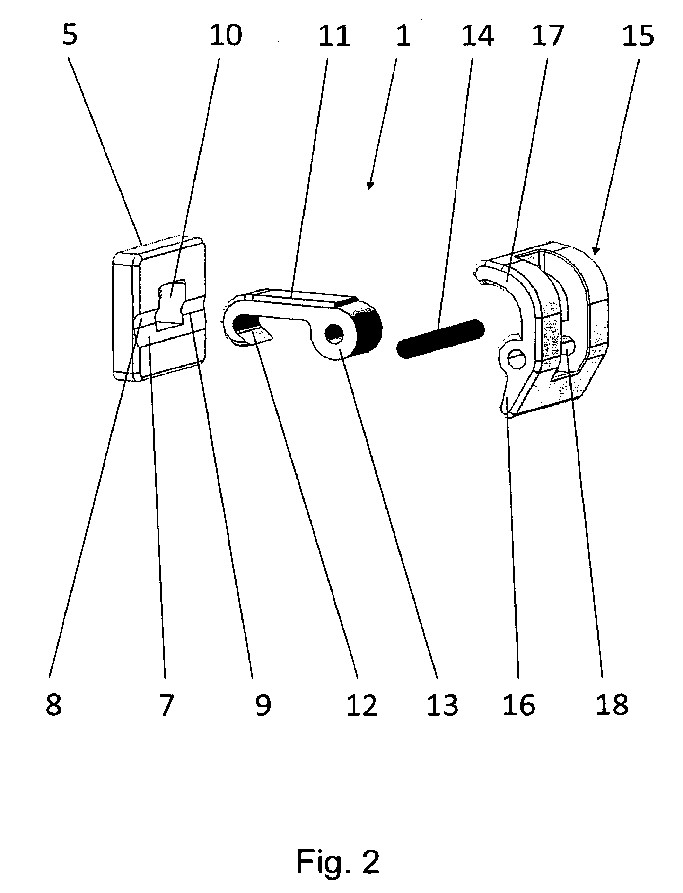

Wie aus der Fig. 1 zu entnehmen ist, sind im Kofferraum 2 des Kraftfahrzeuges die Einsenkungen 3 mit typisierten Maßen ausgebildet, in denen sich Drahtösen 4 befinden, die fest mit der Fahrzeugkarosserie verbunden sind. Die Drahtösen 4 dienen zur Befestigung des eigentlichen demontierbaren Aufhängemittels 1. Dieses, wie in der Fig. 2 dargestellt, wird durch eine Grundplatte 5 mit einer vorteilhaften viereckiger Form gebildet. Die Grundplatte 5 weist eine Stirnfläche 6 auf, auf der eine Arbeitsaussparung 7 und eine Sicherungsaussparung 8 und zwischen diesen eine Kante 9 ausgebildet ist. In der Öffnung 10 der Grundplatte 5 ist verschiebbar das Ankerglied 11 gelagert, das an einem Ende einen Haken 12 und an dem anderen Ende ein Auge 13 aufweist. In diesem ist der Bolzen 14 gelagert, auf dem schwenkbar die Hängeöse 15 befestigt ist. Diese weist eine Form der C-Buchstabe auf und umfasst einen Abstützteil 16 und einen Hängeteil 17, zwischen denen Befestigungsöffnungen 18 ausgebildet sind.

Der Einbau des demontierbaren Aufhängemittels 1 erfolgt so, dass der Haken 12 des Ankerglieds 11 in die Drahtöse 4 an der Fahrzeugkarosserie eingehakt wird. Danach wird die Hängeöse 15 im Uhrzeigersinn gedreht, bis der Abstützteil 16 die Stirnfläche 6 der Grundplatte 5 berührt. Durch weitere Drehung, bei der sich der Abstützteil 16 auf der Arbeitsaussparung 7 an der Stirnfläche 6 bewegt, wird die Grundplatte 5 von der Hängeöse 15 weggedrückt, wobei beim gleichzeitigen Ausfahren des Ankerglieds 11 aus der Öffnung 10 in der Grundplatte 5 der Haken 12 in der Drahtöse 4 fest eingehakt und die Drehung der Hängeöse 15 so beendet wird, dass der Abstützteil 16 der Hängeöse 15 über die Kante 9 in die Sicherungsaussparung 8 einrückt. Somit ist der Einbau des demontierbaren Aufhängemittels 1 beendet. In dieser fixierten Stellung, zu derer Stabilität die viereckige Form der Grundplatte 5 beiträgt, welche in die Aussparung 3 der Seitenverkleidung 19 des Kofferraumes eingreift, kann das ausbaubare Aufhängemittel 1 zur Aufhängung der transportierten Gegenstände, wie z.B. der Einkaufstaschen, eventuell zur Sicherung des Gepäcks im Kofferraum mit den Elementen des Netzprogramms verwendet werden. Zu seinem Einhaken dient die Hängeöse 15. Der Ausbau erfolgt in der rückwärtigen Reihenfolge.

### Bezugszeichenliste

- 1: Demontierbares Aufhängemittel
- 2: Kofferraum
- 3: Einsenkung
- 4: Drahtöse
- 5: Grundplatte
- 6: Stirnfläche
- 7: Arbeitsaussparung
- 8: Sicherungsaussparung
- 9: Kante
- 10: Loch
- 11: Ankerglied
- 12: Haken
- 13: Auge
- 14: Bolzen
- 15: Hängeöse
- 16: Abstützteil
- 17: Hängeteil
- 18: Befestigungsöffnung
- 19: Seitenverkleidung

## Patentansprüche

1. Demontierbares Aufhängemittel eines Kofferraumes, das zur Befestigung an einer Drahtöse in einer Einsenkung einer Seitenverkleidung des Kofferraumes bestimmt ist, bestehend aus einer Grundplatte mit Öffnung, in dem verschiebbar ein Ankerglied gelagert ist, zu dem eine Hängeöse befestigt ist, **dadurch gekennzeichnet, dass** das Ankerglied (11) an einem Ende einen Haken (12) und am anderen Ende ein Auge (13) mit Bolzen (14) aufweist, an dem schwenkbar die Hängeöse (15) befestigt ist, die durch einen Abstützteil (16) und einen Hängeteil (17) gebildet wird, wobei in der befestigten Position des demontierbaren Hängemittels (1) der Haken (12) in der Drahtöse (4) eingehakt ist und der Abstützteil (16) der Hängeöse (15) sich an einer Stirnwand (6) der Grundplatte (5) abstützt.

2. Demontierbares Hängemittel des Kofferraumes **dadurch gekennzeichnet, dass** die Grundplatte (5) eine Arbeitsaussparung (7) und eine Sicherungsaussparung (8) aufweist.

3. Demontierbares Hängemittel des Kofferraumes **dadurch gekennzeichnet, dass** die Grundplatte (5) eine mit der Form einer Aussparung (3) der Seitenverkleidung (19) übereinstimmende Form aufweist.

4. Demontierbares Hängemittel des Kofferraumes **dadurch gekennzeichnet, dass** die Grundplatte (5) eine viereckige Form aufweist.

## Claims

1. Demountable suspension means in a luggage compartment, that suspension means being intended for fastening to a wire eyelet in a hollow in a side panel of the luggage compartment and consisting of a baseplate with an opening, in which an anchor element, to which a suspension eyelet is fastened, is displaceably mounted, **characterized in that** the anchor element (11) has a hook (12) at one end and, at the other end, has an eye (13) with a bolt (14) to which the suspension eyelet (15), which is formed by a supporting part (16) and a suspension part (17), is pivotably fastened, wherein, in the fastened position of the demountable suspension means (1), the hook (12) is hooked in the wire eyelet (4) and supporting part (16) of the suspension eyelet (15) is supported on an end wall (6) of the baseplate (5).

2. Demountable suspension means of the luggage compartment, **characterized in that** the baseplate (5) has a working recess (7) and a securing recess (8).

3. Demountable suspension means of the luggage compartment, **characterized in that** the baseplate (5) has a shape corresponding to the shape of a recess (3) in the side panel (19).

4. Demountable suspension means of the luggage compartment, **characterized in that** the baseplate (5) has a four-cornered shape.

## Revendications

1. Moyen de suspension démontable d'un compartiment à bagages, qui est prévu pour être fixé à un oeillet pour fil métallique dans un renfoncement d'un habillage latéral du compartiment à bagages, constitué d'une plaque de base avec une ouverture, dans lequel est monté de manière déplaçable un organe d'ancrage auquel est fixé un oeillet d'accrochage, **caractérisé en ce que** l'organe d'ancrage (11) présente à une extrémité un crochet (12) et à l'autre extrémité un oeil (13) avec un boulon (14) sur lequel est fixé de manière pivotante l'oeillet d'accrochage (15), qui est formé par une partie de support (16) et une partie d'accrochage (17), le crochet (12) étant accroché dans l'oeillet pour fil métallique (4) dans la position fixée du moyen de suspension démontable (1) et la partie de support (16) de l'oeillet d'accrochage (15) s'appuyant sur une paroi frontale (6) de la plaque de base (5).

2. Moyen de suspension démontable d'un compartiment à bagages, **caractérisé en ce que** la plaque de base (5) présente un évidement de travail (7) et un évidement de fixation (8).

3. Moyen de suspension démontable d'un compartiment à bagages, **caractérisé en ce que** la plaque de base (5) présente une forme coïncidant avec la forme d'un évidement (3) de l'habillage latéral (19).

4. Moyen de suspension démontable d'un compartiment à bagages, **caractérisé en ce que** la plaque de base (5) présente une forme quadrilatérale.
